# EUROPEAN PATENT SPECIFICATION

(11) **EP 2 773 532 B1**
(45) Date of publication and mention of the grant of the patent: **25.12.2019**
(21) Application number: 12845136.6
(22) Date of filing: 01.11.2012
(51) Int. Cl.: B60R 1/12

(54) **VISION SYSTEM WITH DOOR MOUNTED EXTERIOR MIRROR AND DISPLAY**
SICHTSYSTEM MIT EINEM TÜRMONTIERTEN AUSSENSPIEGEL UND EINER ANZEIGE
SYSTÈME DE VISION AVEC MIROIR EXTÉRIEUR MONTÉ SUR LA PORTIÈRE ET AFFICHAGE

(30) Priority: 01.11.2011 US 201161554015 P
(43) Date of publication of application: 10.09.2014
(73) Proprietor: Magna Mirrors Of America, Inc., Holland, Michigan 49423 (US)
(72) Inventor: O'CONNELL, David P., Ada, Michigan 49301 (US); PETERSON, Kenneth C., Ada, Michigan 49301 (US); FOOTE, Keith D., Grand Rapids, Michigan 49508 (US)
(74) Representative: FRKelly
(86) International application number: PCT/US2012/062905
(87) International publication number: WO 2013/067082

(56) References cited:
- EP-A1- 0 028 370
- EP-A2- 2 003 019
- WO-A1-2011/105638
- DE-A1-102004 034 477
- DE-U1- 20 010 180
- FR-A1- 2 672 857
- FR-A1- 2 783 778
- US-A- 5 289 321
- US-A1- 2005 146 607
- US-A1- 2008 007 428
- US-A1- 2008 106 389
- US-A1- 2008 149 796
- US-B1- 6 175 300

## Description

### CROSS REFERENCE TO RELATED APPLICATION

The present application claims the benefit of U.S. provisional application Ser. No. 61/554,015, filed Nov. 1, 2011.

### FIELD OF THE INVENTION

The present invention relates to exterior rearview mirror systems and, more particularly, to an exterior rearview mirror system having a blind spot/object detection and display system at the exterior rearview mirror assembly and door of the vehicle.

### BACKGROUND OF THE INVENTION

It is known to provide an object in a blind spot detection/LCA system for a vehicle that detects the presence of another vehicle or object in the lane next to the host vehicle, where it may be difficult for the driver of the host vehicle to determine whether or not there is another vehicle or object adjacent to the host vehicle. Such an object in a blind spot detection/LCA system often includes a visual indicator that visually indicates the detection of another vehicle or object to the driver of the host vehicle. It is known to provide a video display at the exterior rearview mirror assembly, such as described in U.S. Pat. No. 7,777,611, or to provide a video display at an interior rearview mirror assembly to display sideward and/or rearward images, such as described in U.S. Pat. No. 5,670,935.

A variety of interior and exterior mirror assemblies with indicators are known in the art, such as U.S. Pat. Nos. 5,668,663; 5,355,284; 5,788,357; 6,257,746; 6,005,724; 5,481,409; 6,111,683; 6,045,243; 6,264,353; 6,512,624; 6,356,376; 2,263,382; 2,580,014; 3,266,016; 4,499,451; 4,588,267; 4,630,904; 4,623,222; 4,721,364; 4,906,085; 5,313,335; 5,587,699; 5,575,552; 5,436,741; 5,587,699; 5,938,320; 6,700,692; and 5,786,772.

### SUMMARY OF THE INVENTION

The present invention provides a vision system for displaying video images of a side region or blind spot region at the side of the vehicle for viewing by the driver of the vehicle. Optionally, a video display screen may be disposed in the vehicle cabin and generally at or mounted at an inside portion of the vehicle door. Optionally, a video display screen may be disposed at a wide angle spotter mirror location (such as at an upper outboard corner region) of the reflective element of the exterior rearview mirror assembly mounted at the exterior side of the vehicle.

According to an aspect of the present invention, a rearview vision system for a vehicle includes an exterior rearview mirror assembly mounted at an exterior portion of a door of a vehicle equipped with the rearview vision system. An imaging sensor or camera is disposed at the exterior rearview mirror assembly and has a generally rearward field of view exterior the vehicle. A video display screen is operable to display video images captured by the imaging sensor. The video display screen is disposed at an interior portion of the vehicle door at which the exterior rearview mirror assembly is mounted.

The video display screen may be disposed at a display housing attached at the interior portion of the vehicle door, and the exterior rearview mirror assembly and the display housing may be part of a vision module that is mountable at the vehicle door as a unit. Optionally, the video display screen may be operable to display information responsive to a user input, and the user input may comprise a touch sensor disposed at the video display screen.

According to another aspect of the present invention, a rearview vision system for a vehicle includes an exterior rearview mirror assembly mounted at an exterior portion of a vehicle equipped with the rearview vision system. The exterior rearview mirror assembly comprises a reflective element attached at a back plate. An imaging sensor is disposed at the vehicle and has a generally rearward and sideward field of view exterior the vehicle and generally at the side of the vehicle at which the exterior rearview mirror assembly is mounted. A video display screen operable to display video images captured by the imaging sensor. The video display screen is disposed behind the reflective element and supported at a cutout corner region of the back plate, whereby images displayed by the video display screen are viewable through the reflective element by the driver of the equipped vehicle when normally operating the equipped vehicle. The video display screen may be operable to display other information for viewing by the driver of the equipped vehicle, such as in response to a detected object or in response to a user input or the like.

These and other objects, advantages, purposes and features of the present invention will become apparent upon review of the following specification in conjunction with the drawings.

### BRIEF DESCRIPTION OF THE DRAWINGS

FIG. 1 is a perspective view of an exterior mirror assembly with a camera in accordance with the present invention;
FIG. 2 is a perspective view of an interior door-mounted video display associated with the exterior mirror assembly and camera of FIG. 1;
FIG. 3 is a perspective view of a display of the exterior mirror and display assembly of the present invention;
FIGS. 4 and 5 are plan views of display screens of the present invention;
FIG. 6 is a perspective view of an exterior mirror assembly and display assembly in accordance with the present invention, shown mounted at a vehicle door;
FIG. 7 is a perspective view of an exterior mirror and display module for mounting at a vehicle door;
FIG. 8 is a perspective view of the exterior mirror and display module of FIG. 7; and
FIG. 9 is a perspective view of the exterior mirror and display module, shown mounted at the vehicle door

### DESCRIPTION OF THE PREFERRED EMBODIMENTS

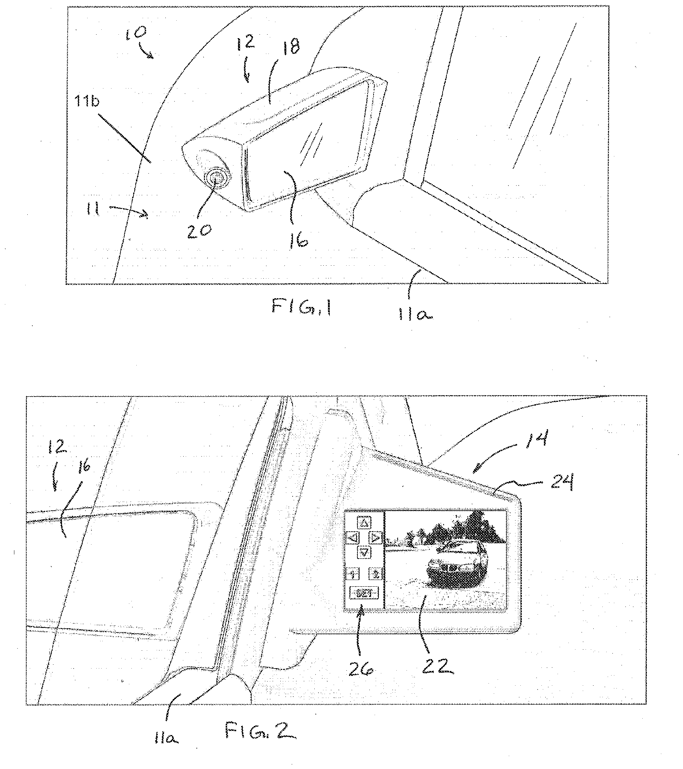

Referring now to the drawings and the illustrative embodiments depicted therein, an exterior rearview mirror system 10 for a vehicle 11 includes an exterior rearview mirror assembly 12 and an in-cabin display device or module 14 disposed at or mounted at the interior of the vehicle door 11a or otherwise near to the exterior rearview mirror assembly 12 (FIGS. 1 and 2). The exterior rearview mirror assembly 12 is mounted at the side 11b of the host or subject or equipped vehicle 11 and includes a mirror reflective element 16 and a mirror shell or casing 18, and a camera or imaging sensor 20 that is disposed at the mirror casing 18 and has a generally rearwardly and sidewardly field of view at the side of the equipped vehicle.

Federal Motor Vehicle Safety Standard (FMVSS), Sec. 111, describes the minimum requirements for an outside rear view mirror for vehicles to be sold in the United States. One of the requirements to meet this regulation is for the reflective glass on the mirror to be a give size with a given field of view. The regulation precludes the use of a camera to replace the mirror because the wording of the regulation specifically states that the mirror must be flat mirror glass of 1:1 magnification of a certain size.

Many modern passenger vehicles, especially larger vehicles such as SUVs and pickup trucks, have mirror glass that is much larger than the minimum size required by FMVSS 111. This is driven primarily by customer demand for the ability to see much more with the rear view mirror than can be seen with the minimum legal glass size, and by the fact that the minimum glass size results in significant blind spots which can potentially lead to accidents.

When the mirror glass is made larger, the entire rear view mirror assembly must be made larger to accommodate the larger glass. This includes the housing, support structures, the mirror actuator, and the mounting area at the vehicle door. Such increased size drives up the cost and adds weight to the vehicle. In addition, the increased profile of the rear view mirror assembly creates more wind drag which reduces fuel economy and increases wind noise.

Many concept vehicles recently shown by automotive manufactures suggest that someday rear view mirrors may be replaced by cameras. As cameras are much smaller and lighter than mirrors, this would solve the weight and wind drag issues, and provide much more styling freedom for vehicle manufacturers. However, under the current FMVSS 111, completely replacing the mirror with a camera is not allowed.

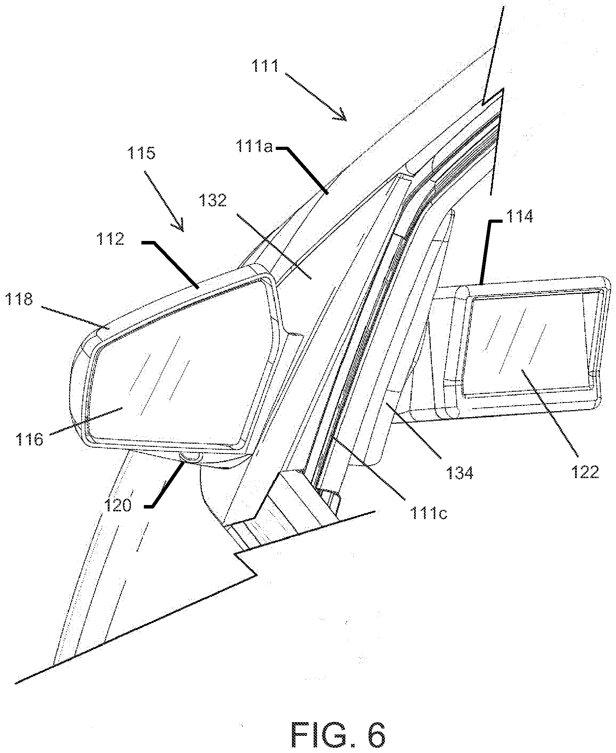

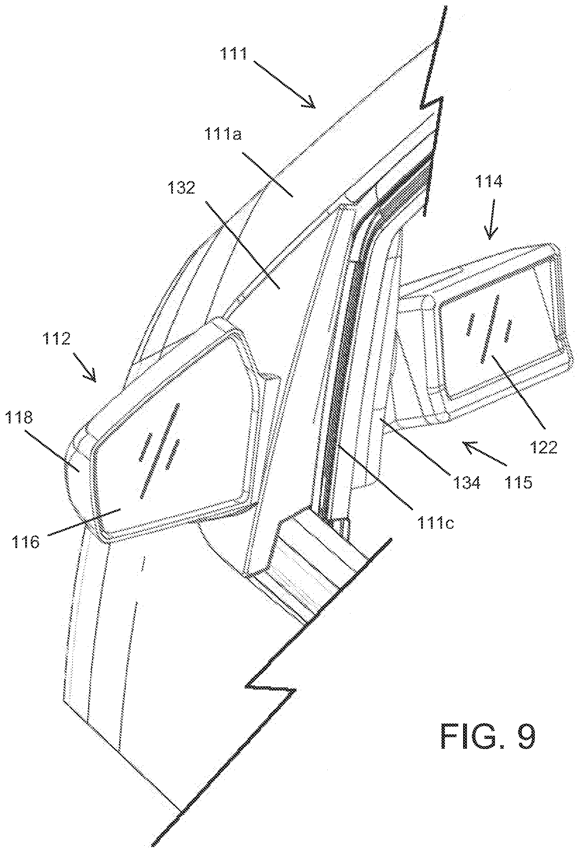

The mirror system and display system of the present invention utilizes a mirror that meets the minimum requirements for FMVSS 111, while providing a camera that provides a greatly enhanced field of view for the driver. The images captured by the camera are displayed at a door-mounted display screen (such as an LCD monitor or the like), which optionally incorporates a touch screen user interface that may be used to adjust camera zoom, pan, and image enhancement, as well as control window regulators and mirror glass positioning, such as discussed below. The display with such a user interface can optionally be used for other driver information services such as hands-free calling and navigation. Since the display is mounted at the interior of the door and opposite the exterior door mounted mirror assembly, the installation and wire routing may be simplified and minimal vehicle design changes may be required to incorporate the system into a vehicle design. Optionally, the display and mirror construction may be provided as a door-mounted module to further ease the installation process, such as discussed in detail below with respect to FIGS. 6-9.

In the illustrated embodiment, exterior rearview mirror assembly 12 may comprise a small or reduced size reflective element 16 that meets, but does not exceed or substantially exceed, the minimum size requirements. The camera 20 may be disposed at any suitable location at mirror assembly 12, such as at an output portion of the mirror casing 18, such as shown in FIG. 1. Camera 20 may comprise any suitable imaging sensor or camera, such as a pixelated imaging array or the like, such as a CMOS imaging array sensor, a CCD sensor or other sensors or the like, such as a camera or sensor of the types disclosed in commonly assigned, U.S. Pat. Nos. 7,965,336; 5,550,677; 5,760,962; 6,097,023 and 5,796,094. Optionally, the camera may comprise a stereo imaging camera or the like, such as by utilizing aspects of the imaging systems described in U.S. Pat. No. 6,396,397 and/or 5,796,094. Optionally, the camera may comprise an infrared or near infrared light sensitive camera and may be suitable for capturing images in low lighting conditions, and/or the camera may include or be associated with an illumination source (such as an infrared or near-infrared light emitting illumination source that, when actuated to emit infrared or near-infrared light at the side of the vehicle, enhances the camera's performance but is not visible or discernible to the driver of the vehicle), such as by utilizing aspects of the cameras described in U.S. Pat. Nos. 7,965,336; 5,550,677; 5,760,962; 6,097,023 and 5,796,094.

Although shown and described as being incorporated at the exterior rearview mirror assembly, it is envisioned that the camera may be disposed elsewhere at the vehicle, such as at a side portion of the vehicle, and having a sideward and rearward field of view. Optionally, the camera may have a wide angle field of view at the side of the vehicle and/or may have an adjustable field of view and/or may capture images for use in other vision systems, such as for use in a top-down view or birds-eye view vision system of the vehicle or a surround view vision system at the vehicle, such as by utilizing aspects of the vision systems described in PCT Application No. PCT/US10/25545, filed Feb. 26, 2010 and published on Sep. 2, 2010 as International Publication No. WO 2010/099416, and/or PCT Application No. PCT/US10/47256, filed Aug. 31, 2010 and published Mar. 10, 2011 as International Publication No. WO 2011/028686, and/or PCT Application No. PCT/US2011/062834, filed Dec. 1, 2011 and published Jun. 7, 2012 as International Publication No. WO2012/075250, and/or PCT Application No. PCT/US2012/048993, filed Jul. 31, 2012, and/or PCT Application No. PCT/US11/62755, filed Dec. 1, 2011 and published Jun. 7, 2012 as International Publication No. WO 2012-075250, and/or PCT Application No. PCT/CA2012/000378, filed Apr. 25, 2012, and/or U.S. patent application Ser. No. 13/333,337, filed Dec. 21, 2011 , and/or U.S. provisional applications, Ser. No. 61/615,410, filed Mar. 26, 2012; Ser. No. 61/588,833, filed Jan. 20, 2012; Ser. No. 61/570,017, filed Dec. 13, 2011; Ser. No. 61/568,791, filed Dec. 9, 2011; and/or Ser. No. 61/559,970, filed Nov. 15, 2011.

Optionally, the camera may have a forward field of view and/or sideward and/or downward field of view for capturing image data for other functions, such as for a lane departure warning system of the vehicle, an automatic headlamp control system of the vehicle, an accident and/or event recording system of the vehicle, a traffic sign recognition system or function, an object or pedestrian or animal detection system or function and/or the like. Optionally, the camera may comprise a wireless camera suitable for attachment at any suitable location at the vehicle and/or at a trailer or the like, such as at a back or rear portion of a trailer that is being towed by the subject vehicle.

The small or reduced size mirror reflective element provides a reduced size rearward field of view to the driver of the vehicle (as compared to larger size mirror reflective elements), and the smaller field of view may be supplemented or enhanced via the video display device 14 disposed at the interior of the vehicle cabin and in an area at or near the exterior rearview mirror assembly. For example, and as shown in FIG. 2, display device 14 may be disposed at an inboard portion of the vehicle door 11a and may be disposed immediately opposite exterior rearview mirror assembly 12. Optionally, the exterior rearview mirror assembly 12 and display device 14 may be incorporated into an imaging module that is mountable to or incorporated in a vehicle door, such that all of the wiring and communication links between the camera and display are provided within the module. The module may be mounted at or installed in the door assembly and may be electrically connected to a vehicle wiring harness via an electrical connector at the door, so that power and/or control of the module and/or system is provided via the vehicle wiring harness.

In the illustrated embodiment, the display device 14 includes a video display screen 22 supported at or housed by a housing or casing or structure 24 so that the display screen is at a location near the door that is readily viewable by a driver of the vehicle and is an area that the driver of the vehicle readily cognitively associates with where to look to see what is to the side and rear of the vehicle (because of the proximity of the display screen to the exterior rearview mirror assembly). When the mirror and display device are mounted at the vehicle door, the display screen and the exterior mirror move with the vehicle door when the vehicle door is opened and closed. Video display screen 22 may comprise any suitable video display screen, such as discussed below, and may comprise a touch screen to allow for user control of the video display and/or other vehicle functions via touching of appropriate locations at the display screen by the driver of the vehicle. For example, and as shown in FIG. 2, the video display screen may comprise directional arrow inputs to allow the user or driver to zoom in or out or to pan the video display up or down or to either side to set the rearward field of view at the display screen to a preferred setting for that individual. The system may include a memory system that also allows the user to set the rearward field of view to a desired setting and to store that setting such as in a similar manner as is done for memory mirror settings and/or memory seat settings and the like.

Optionally, the display may be mounted elsewhere in the vehicle and/or at the vehicle door or vehicle door opening, such as at the A pillar of the vehicle, or at the top of the instrument panel of the vehicle, or at the steering column of the vehicle, or at or in the headliner of the vehicle and/or the like. Optionally, as an alternative to a self-contained display monitor, the mirror and camera and display system of the present invention may provide a docking station (such as at or near the vehicle door and/or door opening of the vehicle) for a cell phone (or tablet or other personal portable display capable device), where the cell phone or personal display device may be docked or connected so that the display screen of the personal display device may function as the display and may display the images captured by the camera.

The display screen 22 preferably displays the captured video images at the entire viewable portion of the display screen, in order to provide relatively large displayed images for viewing by the driver of the vehicle while the driver is normally operating the vehicle. In the illustrated embodiment, the user inputs are touch or proximity sensors disposed at a portion of the display screen. The video display screen, when normally operating to display video images captured by the mirror camera 20, may display the video images over the entire display portion or active portion of the display screen and, responsive to a user input (such as a user or driver touching a portion of the display screen or touch screen), may display icons or indicia 26 at a portion of the display screen 22 to indicate where the user can touch to actuate or control the display settings or the like. The user inputs or touch sensors may comprise any suitable sensors or inputs, and may utilize aspects of the inputs and sensors described in U.S. Pat. Nos. 7,224,324; 7,253,723; 7,255,451 and/or 8,154,418, and/or PCT Application No. PCT/US2011/056295, filed Oct. 14, 2011 and published Apr. 19, 2012 as International Publication No. WO 2012/051500, and/or PCT Application No. PCT/US2010/032017, filed Apr. 22, 2010 and published Oct. 28, 2010 as International Publication No. WO 2010/124064, and/or PCT Application No. PCT/US10/51741, filed Oct. 7, 2010 and published Apr. 14, 2011 as International Publication No. WO 2011/044312, and/or U.S. provisional applications, Ser. No. 61/705,876, filed Sep. 26, 2012; Ser. No. 61/697,554, filed Sep. 6, 2012; Ser. No. 61/665,509, filed Jun. 28, 2012; Ser. No. 61/664,438, filed Jun. 26, 2012; Ser. No. 61/647,179, filed May 15, 2012; Ser. No. 61/614,877, filed Mar. 23, 2012; Ser. No. 61/601,756, filed Feb. 22, 2012; Ser. No. 61/590,578, filed Jan. 25, 2012; Ser. No. 61/565,541, filed Dec. 1, 2011; and/or Ser. No. 61/558,623, filed Nov. 11, 2011.

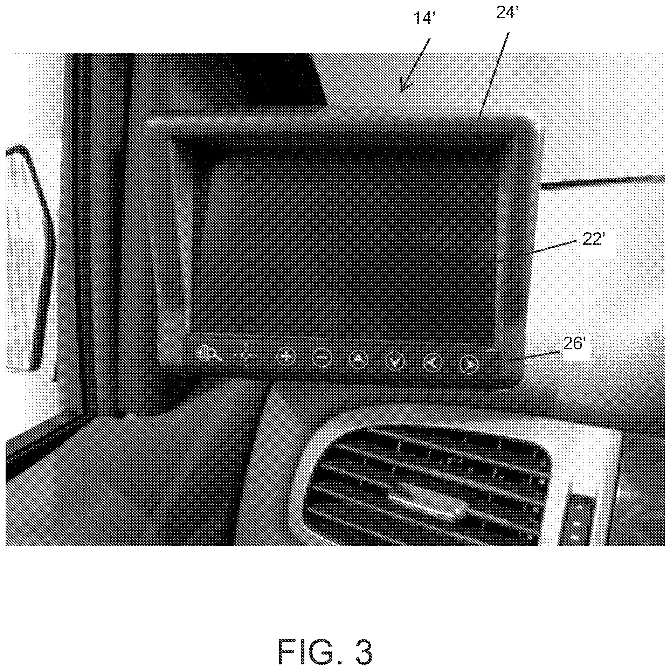

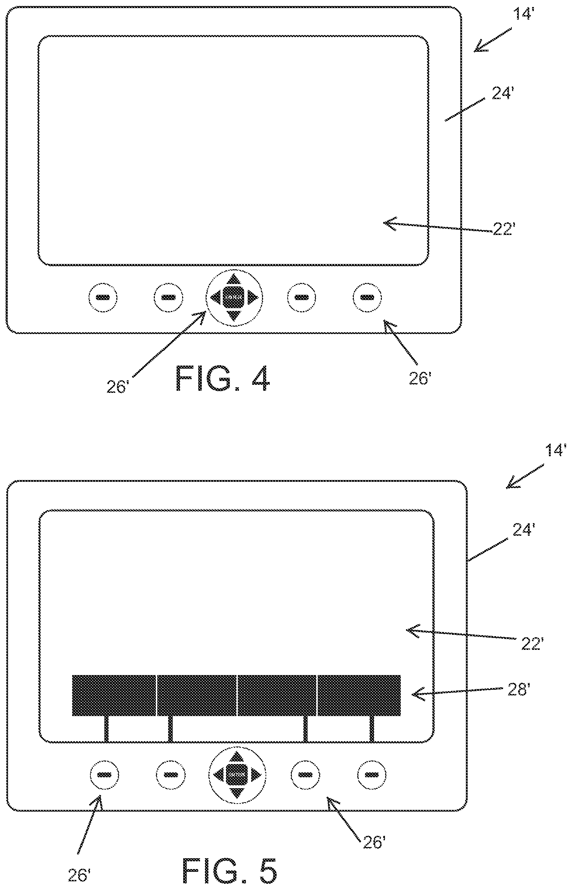

Optionally, and with reference to FIGS. 3-5, the user actuatable controls or inputs 26' may be provided as buttons or switches at the display housing 24' and at or near the video display screen 22' of the display device 14'. The user inputs disposed at the casing or at the display screen may comprise buttons or toggle switches or the like or may comprise touch sensors, tactile inputs, capacitive touch sensors, proximity sensors, optical proximity sensors, gesture recognition sensors and/or the like. The user inputs may provide a variety of functions, so that the user can select what is to be displayed on the display screen and may adjust the displayed information to enhance viewing of the information. For example, and such as shown in FIG. 3, the user inputs 26' may include a search input to allow the user to access a search engine or search function (such as via an internet connection or the like), or a GPS function or navigation function, or a compass function (where a compass display is displayed at the display screen), or the user inputs 26' may provide functions that allow the user to zoom in or out at the displayed images and/or to pan left or right or up or down so that the user can view a desired portion of the displayed images. Optionally, the user inputs may provide for an up, down, left and right scrolling function (such as via separate buttons as shown in FIG. 3 or via a toggle type button or switch such as shown in FIGS. 4 and 5), such as for scrolling through displayed information to select a desired display function or vehicle system function or the like. Optionally, and such as shown in FIG. 5, the display screen may display an indication 28' of the function for the associated user inputs or buttons, and may display the indication or information generally at or near (such as above) and cognitively associated with the user input (such as by utilizing aspects of the display systems described in U.S. Pat. Nos. 7,224,324 and/or 7,255,451, and/or U.S. patent application Ser. No. 13/632,572, filed Oct. 1, 2012) so that the user readily recognizes that the information or indication displayed is associated with particular ones of the user inputs. The display screen may be operable to display the input function information responsive to a proximity sensor at the user inputs, such that the function information is displayed as a user's finger approaches the user inputs so that the user is informed as to the particular function of each user input before he or she presses or selects a particular user input.

Optionally, responsive to a user input (such as a user or driver touching a portion of the display screen or touch screen), the display screen may display other menus or inputs or the like, whereby the user can touch the appropriate or selected menu items to select other functions of the touch screen or inputs. For example, a menu may be displayed that allows the user to select inputs or controls for a door lock function or window function or the like. Optionally, the touch screen may, when in its video display mode with no user inputs or controls being displayed, be actuatable to control various features responsive to a touch or proximity by the user's finger at various locations at the touch screen. For example, if the user touches the left region or outboard region of the display screen, the display screen zoom/pan controls may be displayed (such as shown in FIG. 2) to allow the user to then adjust the display screen zoom/pan parameters, and if the user touches a right region or inboard region of the display screen, the display screen may display brightness or intensity or contrast controls to allow the user to adjust the intensity or contrast or the like of the displayed images. Optionally, the controls or user inputs may also or otherwise adjust the field of view of the camera, such as selectively adjusting the field of view upward/downward and/or forward/rearward and/or side-to-side and/or the like, in order to provide a desired field of view for viewing by the driver of the vehicle. Optionally, the controls or user inputs may allow the driver to select what camera is used to capture the displayed images, such as by selecting a sideward camera or rear camera or front camera or the like, such as by utilizing aspects of the display systems described in U.S. patent application Ser. No. 12/187,725, filed Aug. 7, 2008. Clearly, other controls and touch responsiveness may be provided at the display/touch screen 22, while remaining within the spirit and scope of the present invention.

Such controls or user inputs may include but are not limited to capacitive touch sensors and/or proximity sensors, tactile buttons, optical proximity sensors, visual gesture recognition systems (similar to, for example, a Kinect™ system or the like), steering wheel mounted controls, voice recognition, console joysticks (similar to, for example, a BMW iDrive controller) and/or the like. The display may also incorporate a means of adjusting the position and/or the angle of the screen to suit the driver's preferences (such as, for example, similar to how an exterior mirror reflective element may be adjusted to adjust the driver's rearward field of view, and such as via a mechanical adjustment or electronic actuator adjustment or the like). Optionally, for a display screen located at a passenger side of the vehicle, the passenger side display screen may be rotated or pivoted or adjusted to a position that is not readily viewable by the driver of the vehicle so that infotainment applications with video content may be safely and legally utilized by passengers and viewed at the passenger side display screen.

Optionally, the vision system 10 may include or be associated with a blind spot monitoring or side object detection system that detects the presence of an object or vehicle in the side lane adjacent to the vehicle and that generates an alert to the driver of the vehicle to alert the driver of the detected object or vehicle if the driver is making a lane change into the side lane where the object or vehicle is detected in or approaching. The display screen 22 may be operable to display alerts or warnings or graphic overlays to indicate to the driver that a vehicle or object is detected in the side lane or that the driver is making an unsafe lane change or the like. Thus, the alert or indication at the display screen may function as a lane change assist (LCA) indicator or indicators and/or a blind spot indicator or indicators. The blind spot alerts may be activated when an object is detected (such as via utilizing aspects of the side object or blind spot detection systems or the like such as described in U.S. Pat. Nos. 7,881,496; 7,492,281; 7,720,580; 7,038,577; 6,882,287; 6,198,409; 5,929,786; and 5,786,772 ) at the side and/or rear of the vehicle (at the blind spot) and when the turn signal is also activated, so as to provide an alert to the driver of the host vehicle that there is an object or vehicle in the lane next to the host vehicle at a time when the driver of the host vehicle intends to move over into the adjacent lane. Optionally, and alternately, the alert or indication may function as a lane change assist alert or indication, where the host vehicle may be detected to be moving into an adjacent lane without the turn signal being activated, and an object or vehicle may be detected at the adjacent lane, whereby the LCA alert may be activated and displayed at the display screen to provide an alert to the driver of the lane change to assist the driver in avoiding unintentional lane changes and/or lane changes when a vehicle or object is detected in the adjacent lane.

Optionally, the mirror assembly may comprise a generally fixed portion that is fixedly attached at the side or door of the vehicle and a movable mirror head portion (including the reflective element and the camera) that is pivotally mounted at the fixed portion. For example, the mirror assembly may comprise a powerfold exterior mirror assembly, where the head portion is pivoted between a use position and a folded position via an electrical actuator (such as an actuator and/or mirror assembly of the types described in U.S. Pat. Nos. 7,350,931; 7,322,710; 7,314,285; 7,267,449; 7,159,992; 7,093,946; 6,926,431; 6,312,135; 6,243,218; 5,703,731; and 5,684,646). Optionally, the powerfold mirror assembly may be configured or operable to fold inward so that the mirror casing and reflective element are at or along the side of the vehicle and at an orientation where only the camera protrudes at the side of the vehicle, such that the camera is operable to capture images sidewardly and/or rearwardly of the vehicle when the mirror assembly is in its folded position.

Optionally, and with reference to FIGS. 6-9, a vision system 110 for a vehicle 111 includes an exterior rearview mirror assembly 112 and an in-cabin display device or module 114 that are part of a modular unit 115 that is configured to be disposed at or mounted at a vehicle door 111a, such as at an opening or recess or receiving portion 111b of the vehicle door 111a. When the modular unit 115 is mounted at the vehicle door 111a, the exterior rearview mirror assembly 112 is disposed at an exterior portion of the vehicle door 111a and the display device 114 (having a display screen 122, such as a video display screen or the like) is disposed at an interior of the vehicle door 111a and near and inboard of the exterior rearview mirror assembly 112. When the modular unit is mounted at the vehicle door, the display screen and the exterior mirror move with the vehicle door when the vehicle door is opened and closed. The exterior rearview mirror assembly 112 includes a mirror reflective element 116 and a mirror shell or casing 118.

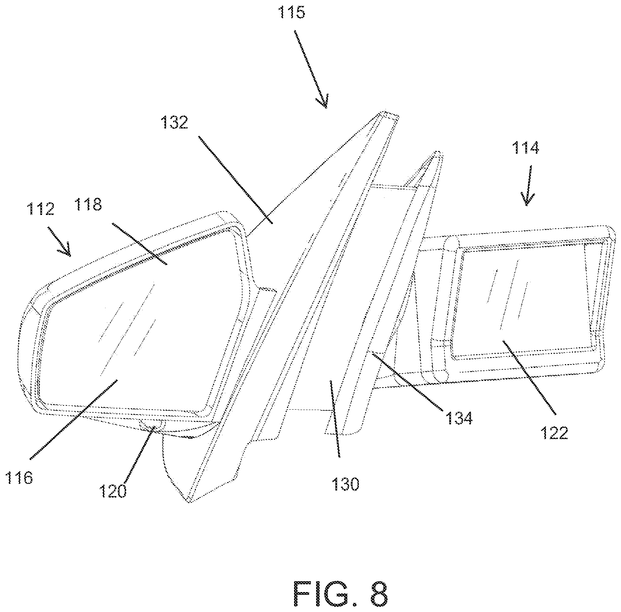

The display device 114 is operable to display video images of images captured by one or more cameras of the vehicle and of the vision system 110. For example, and as shown in FIGS. 6 and 8, the exterior rearview mirror assembly 112 may include a camera or imaging sensor 120 that may be disposed at the mirror casing 118 and that may have a generally rearwardly and sidewardly field of view at the side of the equipped vehicle. Optionally, the camera may have a generally forwardly and/or downwardly and/or sidewardly and/or rearwardly field of view depending on the particular application of the vision system. Optionally, the display device 114 may be operable to display images captured by one or more cameras, which may be disposed at the exterior rearview mirror assembly 112 (and incorporated in the modular unit 115) or which may be disposed elsewhere at the vehicle (and may have the captured images communicated to the display device via a vehicular network bus or communication bus (such as a CAN or LIN bus of the vehicle) or via a wireless communication or a wired communication or link or the like).

In the illustrated embodiment, the exterior rearview mirror assembly 112 houses or supports the camera or image sensor 120, with the camera 120 having a generally rearward field of view such as described above. Optionally, the display device may be operable to display images captured from one or more cameras disposed elsewhere at the vehicle (such as at a side portion of the vehicle or vehicle door or at a rear portion of the vehicle or elsewhere at the vehicle), where the display device may receive video image data wirelessly or via a wire connection or link with the camera or cameras or via a vehicle bus (such as a CAN bus or LIN bus of the vehicle), such that the exterior mirror may not include or support a camera thereat.

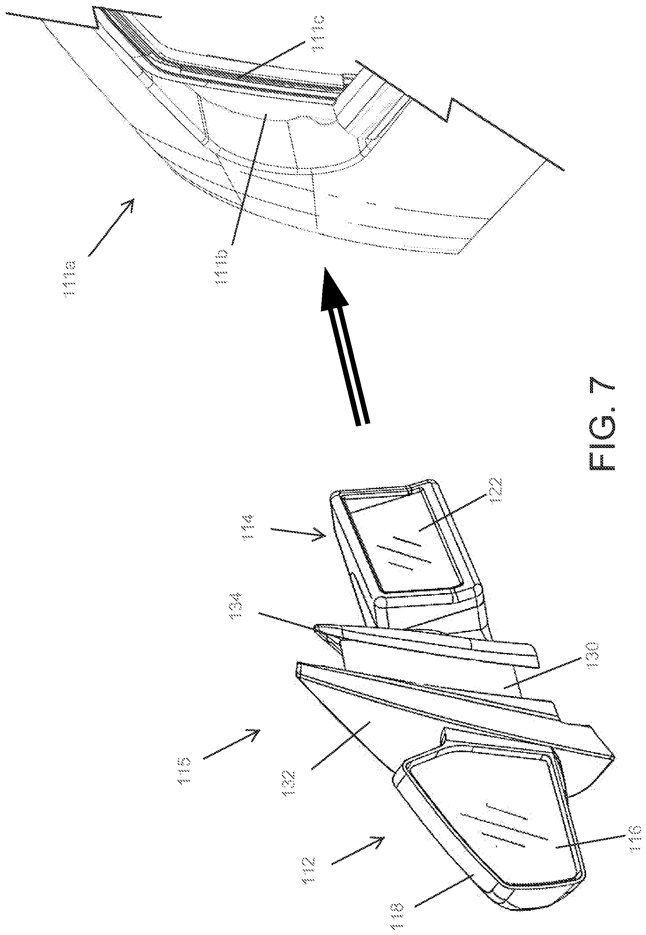

In the illustrated embodiment, the exterior rearview mirror assembly 112 and display device 114 are part of a module or modular unit 115 which is mounted at an opening or recess or receiving portion 111b of a vehicle door 111a. As shown in FIGS. 7 and 8, the modular unit 115 includes a central portion or connecting portion or mounting portion 130 that is disposed between the exterior rearview mirror assembly 112 and the display device 114 and that is configured to extend through the door opening or recess 111b and to be attached thereat to mount the exterior rearview mirror assembly 112 and the display device 114 at the vehicle door 111a. The modular unit 115 also includes an exterior trim portion or sail portion 132 at an outer portion of the unit so that, when the modular unit is attached at the vehicle door 111a, the outer or exterior trim portion provides a finished trim appearance at the outer portion of the vehicle door (with the exterior rearview mirror assembly disposed at the exterior trim portion). The module unit 115 also includes an interior trim portion 134 at an inner portion of the unit so that, when the modular unit is attached at the vehicle door 111a, the interior trim portion provides a finished trim appearance at the interior portion of the vehicle door (with the display device disposed at the interior trim portion).

As shown in FIG. 7, the vehicle door 111a includes a recess or receiving portion or aperture 111b at a forward region of the window opening of the vehicle door. The modular unit 115 is configured to be received at the receiving portion 111b so that the central portion 130 is disposed at and through the receiving portion 111b, with the exterior and interior trim portions overlapping and/or mate with the respective exterior and interior portions of the vehicle door to provide the desired trip appearance at the exterior and interior door portions or surfaces. As can be seen in FIGS. 6, 7 and 9, the vehicle door 111a may include a track and seal 111c for a movable door window (not shown), and the track and seal may be disposed along the central or mounting portion 130 of the modular unit 115 when the modular unit is disposed at the receiving portion 111b of the vehicle door 111a. The modular unit 115 and receiving portion 111b of vehicle door 111a may be configured to allow the modular unit to be inserted into and through the receiving portion 111b (such as by inserting the display device and interior trim portion through an aperture or space at the vehicle door and securing the modular unit at the receiving portion when the exterior trim portion is seated at the exterior surface or portion of the vehicle door). Optionally, the modular unit 115 may comprise a two piece construction, where the central portion 130 is part of either or both of the exterior mirror and exterior trim construction and/or the display device and interior trim construction, whereby the central portion 130 (or portion thereof) may be inserted into the door receiving portion at either side of the door and the exterior construction may be assembled or connected to the interior construction (such as via a snap fit connection or fastener connection or the like) when the exterior trim portion is seated against the exterior portion or surface of the vehicle door and when the interior trim portion is seated against the interior portion or surface of the vehicle door. The mirror and display module thus may be readily mounted at or attached at a vehicle door, such as at a vehicle assembly plant. Optionally, the mirror and display module or modular unit may be supplied to the vehicle manufacturer by a single mirror/display manufacturer.

Optionally, and desirably, electrical connection to a vehicle wiring harness or door wiring harness or the like may be made when the module is attached at the vehicle door, such as via a plug and socket connection at the central portion or mounting portion of the modular unit and such as within the central portion or mounting portion before or as the two parts of the modular unit are connected together at the vehicle door. Thus, the electrical connection for power and/or control and/or communication with the vehicle power source and/or vehicle controls or vehicle network bus or the like may be readily made for the display device and mirror assembly as the modular unit is mounted at the vehicle door. The electrical connection and/or data connections may include connections for the camera in applications where the camera is part of the modular unit and/or may include data from one or more cameras disposed elsewhere at the vehicle. The electrical connection and/or data connections may include connections for other accessories disposed at the exterior rearview mirror assembly, such as blind spot indicators and/or exterior lighting systems and/or the like that may be associated with other systems of the vehicle, such as a side object detection system, a blind spot warning system, a lane departure warning system, an exterior lighting system and/or the like. Optionally, the electrical connection and mechanical connection of the module may be made as the module is snapped or otherwise mounted or attached at the vehicle door and/or at the vehicle, such as by utilizing aspects of the connections described in U.S. Pat. Nos. 6,669,267; 6,969,101; 6,824,281; and/or 7,188,963.

Thus, the mirror mounted camera and in-cabin door mounted display screen of the present invention provides a video display in the cabin of the vehicle and at or near the exterior rearview mirror assembly, whereby the driver of the vehicle can readily view and cognitively associate the displayed video images with the rearward field of view typically provided at an exterior rearview mirror assembly by the mirror reflective element of the exterior rearview mirror assembly. Because the video display screen is provided to display the video images captured by the rearward facing camera at the side of the vehicle, the mirror reflective element can be reduced in size to a minimum size as required, thereby reducing the weight and aerodynamic drag at the exterior rearview mirror assembly. The display screen and camera may be incorporated into a mirror and display module that may be mounted at or installed at or incorporated in the vehicle door assembly to provide enhanced assembly processes and to obviate communication links to display screens and controls remote from the exterior rearview mirror assembly.

By positioning the display device at or near or associated with the exterior rearview mirror assembly of the vehicle, the present invention facilitates the driver's cognitive association of the display with a side/rearward mirror image of the area sideward and rearward of the vehicle (such as is typically viewed at an exterior rearview mirror of a vehicle). It is envisioned that implementation of the display device at the door location may obviate the need for an exterior rearview mirror assembly, whereby the camera may be disposed elsewhere at the vehicle, such as at the side of the vehicle or the like.

Optionally, for example, the video display screen or device may be operable to display images captured by one or more cameras of the vehicle, such as a side camera or a rearward viewing camera of the vehicle (and may display rearward video images during a reversing maneuver of the vehicle, such as responsive to the vehicle gear actuator being placed in a reverse gear position or the like to assist the driver in backing up the vehicle), and optionally may be operable to display other information, such as a compass heading or directional heading character or icon or the like, such as when the vehicle is not undertaking a reversing maneuver, such as when the vehicle is being driven in a forward direction along a road (such as by utilizing aspects of the display system described in PCT Application No. PCT/US2011/056295, filed Oct. 14, 2011 and published Apr. 19, 2012 as International Publication No. WO 2012/051500). Optionally, the vision system (utilizing the sideward and rearward facing cameras and other cameras disposed at the vehicle with exterior fields of view) may provide a display of a top-down view or birds-eye view of the vehicle or a surround view at the vehicle, such as by utilizing aspects of the vision systems described in PCT Application No. PCT/US10/25545, filed Feb. 26, 2010 and published on Sep. 2, 2010 as International Publication No. WO 2010/099416, and/or PCT Application No. PCT/US10/47256, filed Aug. 31, 2010 and published Mar. 10, 2011 as International Publication No. WO 2011/028686, and/or PCT Application No. PCT/US2011/062834, filed Dec. 1, 2011 and published Jun. 7, 2012 as International Publication No. WO2012/075250, and/or PCT Application No. PCT/US2012/048993, filed Jul. 31, 2012, and/or PCT Application No. PCT/US11/62755, filed Dec. 1, 2011 and published Jun. 7, 2012 as International Publication No. WO 2012-075250, and/or PCT Application No. PCT/CA2012/000378, filed Apr. 25, 2012 , and/or U.S. patent application Ser. No. 13/333,337, filed Dec. 21, 2011, and/or U.S. provisional applications, Ser. No. 61/615,410, filed Mar. 26, 2012; Ser. No. 61/588,833, filed Jan. 20, 2012; Ser. No. 61/570,017, filed Dec. 13, 2011; Ser. No. 61/568,791, filed Dec. 9, 2011; and/or Ser. No. 61/559,970, filed Nov. 15, 2011. Optionally, additional functions may include GPS navigation, auxiliary turn-by-turn prompts for a vehicle or primary or main navigation system, BLUETOOTH hands-free calling, climate control, trip computer, radio or music playback controls, ordering food at a fast food restaurant, using an ATM and/or the like.

Optionally, the display may utilize aspects of the displays of the types disclosed in U.S. Pat. Nos. 5,530,240 and/or 6,329,925, and/or of display-on-demand or transflective type displays, such as the types disclosed in U.S. Pat. Nos. 7,855,755; 7,777,611; 7,626,749; 7,581,859; 7,446,650; 7,370,983; 7,338,177; 7,274,501; 7,255,451; 7,195,381; 7,184,190; 6,690,268; 5,668,663 and/or 5,724,187, and/or in U.S. pat. application Ser. No. 10/538,724, filed Jun. 13, 2005 and published Mar. 9, 2006 as U.S. Publication No. US-2006-0050018, and/or PCT Application No. PCT/US03/40611, filed Dec. 19, 2003 and published Jul. 15, 2004 as International Publication No. WO 2004/058540. The display may be viewable through the reflective element when the display is activated to display information. The display element may be any type of display element, such as a vacuum fluorescent (VF) display element, a light emitting diode (LED) display element, such as an organic light emitting diode (OLED) or an inorganic light emitting diode, an electroluminescent (EL) display element, a liquid crystal display (LCD) element, a video screen display element or backlit thin film transistor (TFT) display element or the like, and may be operable to display various information (as discrete characters, icons or the like, or in a multi-pixel manner) to the driver of the vehicle, such as passenger side inflatable restraint (PSIR) information, tire pressure status, and/or the like. The mirror assembly and/or display may utilize aspects described in U.S. Pat. Nos. 7,184,190; 7,255,451; 7,446,924 and/or 7,338,177. The thicknesses and materials of the coatings on the substrates of the reflective element may be selected to provide a desired color or tint to the mirror reflective element, such as a blue colored reflector, such as is known in the art and such as described in U.S. Pat. Nos. 5,910,854; 6,420,036; and/or 7,274,501.

Optionally, the exterior rearview mirror assembly may include the camera thereat, and the camera may comprise any suitable camera or image sensor, such as a camera of the types described in U.S. Pat. Nos. 7,965,336; 7,339,149; 5,550,677; 5,760,962; 6,097,023 and 5,796,094. Optionally, the exterior rearview mirror assembly may also or otherwise include another accessory thereat, such as a blind spot indicator and/or a turn signal indicator and/or a light module or assembly and/or the like (such as indicators and lighting devices that may utilize aspects of the devices described in U.S. Pat. Nos. 7,581,859; 7,289,037; 6,227,689; 6,582,109; 5,371,659; 5,497,306; 5,669,699; 5,823,654; 6,176,602; and/or 6,276,821, and/or U.S. patent applications, Ser. No. 11/226,628, filed Sep. 14, 2005 and published Mar. 23, 2006 as U.S. Publication No. US-2006-0061008, Ser. No. 13/249,433, filed Sep. 30, 2011; and/or Ser. No. 12/596,891, filed Oct. 21, 2009, and/or PCT Application No. PCT/US2006/018567, filed May 16, 2006 and published Nov. 23, 2006 as International Publication No. WO 2006/124682. Optionally, the exterior rearview mirror assembly may include a wide angle reflector at or integral with the reflective element, such as by utilizing aspects of the elements described in U.S. Pat. Nos. 7,748,856; 7,255,451; 7,195,381; 6,717,712; 7,126,456; 6,315,419; 7,097,312; and/or 6,522,451.

Optionally, the back plate may include a perimeter framing portion or bezel portion 20c that extends around the perimeter edges of the reflective element to support the reflective element and frame the reflective element at the mirror assembly (such as by utilizing aspects of the mirror assemblies described in U.S. Pat. Nos. 7,581,859 and/or 8,058,977). The perimeter bezel portion may be narrow or small depending on the particular application of the reflective element and mirror reflector sub-assembly. Optionally, the mirror reflector sub-assembly may comprise a bezelless or frameless reflective element (such as the types described in U.S. Pat. Nos. 7,626,749; 7,255,451 and/or 7,184,190, and/or U.S. patent application Ser. No. 11/226,628, filed Sep. 14, 2005 and published Mar. 23, 2006 as U.S. Publication No. US-2006-0061008 ), whereby the back plate may not include a perimeter framing portion or bezel portion around the perimeter of the reflective element.

The back plate or attachment plate may include an attachment element or elements (such as an annular ring or tab or annular prongs or annular snaps or the like) formed or established at the rear of the backing portion for attaching the back plate and the reflective element to a mirror actuator (such as a mirror actuator as known in the art and/or as described in U.S. Pat. Nos. 7,080,914; 7,073,914; 6,916,100; 6,755,544; 6,685,864; 6,467,920; 6,362,548; 6,243,218; 6,229,226; 6,213,612; 5,986,364 and 5,900,999 ), which is adjustable or operable to adjust a viewing angle of the mirror reflective element.

Optionally, a heater pad may be provided at the rear surface of the glass substrate of reflective element and between the backing portion of the back plate and the reflective element to provide an anti-fogging of de-fogging feature to the exterior mirror assembly (such as by utilizing aspects of the heater elements or pads described in U.S. Pat. No. 7,400,435). The back plate and/or heater pad may include suitable electrical connectors and connections incorporated therein (such as by utilizing aspects of the mirror assembly described in U.S. Pat. No. 7,400,435) for electrically connecting the heater pad and/or display element (or other suitable electrical connectors may be utilized, such as electrical leads or wire harnesses or pigtails or other separate connectors or cables or the like). The heater pad may include a hole or opening or aperture or cutout region (or optionally a window or transparent or translucent or diffuse portion of the heater pad, such as a clear or diffusing transparent polyester flexible plastic film or element) that generally corresponds to the aperture or cutout region of the back plate when the heater pad is attached to the rear surface of the glass substrate of the reflective element and when the back plate is attached to the rear surface of the heater pad (so that the heater pad does not encompass or overlap the video display screen and circuit board, although optionally a portion of the heater pad may overlap or partially overlap the video display screen and circuit board). Optionally, and desirably, the heater pad may include an adhesive layer (such as a pressure sensitive adhesive layer) at its rear surface for adhering the back plate to the heater pad and thus to the rear surface of the glass substrate of the reflective element.

Although shown and described as being located at a driver side exterior mirror, the exterior mirror wide angle display of the present invention may also or otherwise be located at the passenger side exterior mirror, if desired. The display screen and control may utilize aspects of the blind spot detection systems described in U.S. Pat. Nos. 7,720,580; 7,626,749; 7,581,859; 7,492,281; 7,038,577; 6,882,287; 6,198,409; 5,929,786; and 5,786,772 and/or U.S. patent applications, Ser. No. 12/187,725, filed Aug. 7, 2008 ; and/or Ser. No. 11/226,628, filed Sep. 14, 2005 and published Mar. 23, 2006 as U.S. Publication No. US-2006-0061008.

The displays of the present invention thus are operable to provide a video display of a rearward field of view to the driver of the host vehicle and may indicate that an object or other vehicle has been detected in the lane or area adjacent to the side of the host vehicle. The display and indication may be operable in association with a blind spot detection system, which may include an imaging sensor or sensors, or an ultrasonic sensor or sensors, or a sonar sensor or sensors or the like. For example, such a blind spot detection system may utilize aspects of the blind spot detection and/or imaging systems described in U.S. Pat. Nos. 7,881,496; 7,720,580; 7,038,577; 6,882,287; 6,198,409; 5,929,786; and/or 5,786,772 and/or of the reverse or backup aid systems, such as the rearwardly directed vehicle vision systems described in U.S. Pat. Nos. 7,005,974; 5,550,677; 5,760,962; 5,670,935; 5,877,897; 6,201,642; 6,396,397; 6,498,620; 6,717,610 and/or 6,757,109, and/or of the automatic headlamp controls described in U.S. Pat. Nos. 7,526,103; 5,796,094 and/or 5,715,093, and/or of the rain sensors described in U.S. Pat. Nos. 6,250,148 and 6,341,523, and/or of other imaging systems, such as the types described in U.S. Pat. Nos. 6,353,392 and 6,313,454, which may utilize various imaging sensors or imaging array sensors or cameras or the like, such as a CMOS imaging array sensor, a CCD sensor or other sensors or the like, such as the types disclosed in commonly assigned, U.S. Pat. Nos. 7,965,336; 7,339,149; 5,550,677; 5,760,962; 6,097,023 and 5,796,094, with all of the above referenced U.S. patents, patent applications and provisional applications and PCT applications being commonly assigned.

Optionally, the video displays of the present invention may alert the driver of the host vehicle of other situations or status or the like. For example, the video display could function to alert the driver of the host vehicle that the brake lights of the host vehicle are functioning properly. Other applications or uses of the video display may be implemented, without affecting the scope of the present invention.

Changes and modifications to the specifically described embodiments may be carried out without departing from the principles of the present invention, which is intended to be limited only by the scope of the appended claims as interpreted according to the principles of patent law.

## Claims

1. A vision system for a vehicle (11; 111), said vision system comprising:
an exterior rearview mirror assembly (12; 112) mounted at an exterior portion of a door (11a; 111a) of a vehicle equipped with said vision system, said exterior rearview mirror assembly comprising a mirror reflective element (16; 116) and a mirror casing (18; 118), wherein said mirror reflective element provides a rearward field of view to a driver of the equipped vehicle;
an imaging sensor (20; 120) disposed at said exterior rearview mirror assembly (12; 112) having a field of view exterior the vehicle;
a video display screen (22; 122) operable to display video images captured by said imaging sensor;
wherein said video display screen is disposed at a display housing attached at an interior portion of the vehicle door at which said exterior rearview mirror assembly is mounted;
wherein said exterior rearview mirror assembly and said display housing (124) are part of a mirror and display module that is mountable at the vehicle door as a modular unit;
wherein said modular unit is configured to mount at an opening (111B) in the vehicle door; and
wherein said modular unit comprises a connecting portion (130) that is disposed between said exterior rearview mirror assembly and said video display screen and that is configured to extend through the opening in the vehicle door to attach thereat to mount said exterior rearview mirror assembly and said video display screen at the vehicle door.

2. The vision system of any preceding claim, wherein said video display screen is operable to display information responsive to a user input (26; 26') disposed at or near said video display screen.

3. The vision system of claim 2, wherein said user input comprises at least one of (i) a touch sensor, (ii) a tactile input, (iii) a capacitive touch sensor, (iv) a proximity sensor, (v) an optical proximity sensor, (vi) a gesture recognition sensor, (vii) a button and (viii) a toggle.

4. The vision system of any preceding claim, wherein said vision system is connected to a network bus of the vehicle.

5. The vision system of claim 4, wherein said vision system communicates with at least one other system of the vehicle via said network bus, and wherein at least one of (i) said imaging sensor captures images for use in connection with an image-based system of the vehicle and (ii) said display screen is operable to display information associated with an information-based system of the vehicle.

6. The vision system of any preceding claim, wherein said imaging sensor has a rearward field of view generally rearwardly of the vehicle.

7. The vision system of any preceding claim, wherein said imaging sensor has a field of view at least one of (i) forward of the vehicle, (ii) sideward of the vehicle and (iii) downward at the side of the vehicle.

8. The vision system of any preceding claim, wherein said vision system is operable to display visual enhancements at said display screen to alert the driver of objects detected in the field of view of said image sensor.

9. The vision system of claim 1, wherein said modular unit comprises an exterior trim portion (132) that is disposed at the exterior portion of the vehicle door when said modular unit is mounted at the opening in the vehicle door and wherein said modular unit comprises an interior trim portion (134) that is disposed at the interior portion of the vehicle door when said modular unit is mounted at the opening in the vehicle door.

## Patentansprüche

1. Sichtsystem für ein Fahrzeug (11; 111), wobei das Sichtsystem Folgendes umfasst:
eine Außenrückspiegelbaugruppe (12; 112), die an einem äußeren Teil einer Tür (11a; 111a) eines Fahrzeugs montiert ist, das mit dem Sichtsystem ausgestattet ist, wobei die Außenrückspiegelbaugruppe ein reflektierendes Spiegelelement (16; 116) und ein Spiegelgehäuse (18; 118) umfasst, wobei das reflektierende Spiegelelement für einen Fahrer des ausgestatteten Fahrzeugs ein nach hinten gerichtetes Sichtfeld bereitstellt;
einen Bildsensor (20; 120), der an der Außenrückspiegelbaugruppe (12; 112) angeordnet ist und ein Sichtfeld außerhalb des Fahrzeugs aufweist;
einen Videoanzeigebildschirm (22; 122), der betriebsfähig ist, um Videobilder anzuzeigen, die von dem Bildsensor aufgenommen wurden;
wobei der Videoanzeigebildschirm an einem Anzeigegehäuse angeordnet ist, das an einem inneren Teil der Fahrzeugtür angebracht ist, an der die Außenrückspiegelbaugruppe montiert ist;
wobei die Außenrückspiegelbaugruppe und das Anzeigegehäuse (124) Teil eines Spiegel- und Anzeigemoduls sind, das an der Fahrzeugtür als eine Moduleinheit montierbar ist;
wobei die Moduleinheit konfiguriert ist, um an einer Öffnung (111B) in der Fahrzeugtür montiert zu werden; und
wobei die Moduleinheit einen Verbindungsteil (130) umfasst, der zwischen der Außenrückspiegelbaugruppe und dem Videoanzeigebildschirm angeordnet ist und der konfiguriert ist, um sich durch die Öffnung in der Fahrzeugtür zu erstrecken, um daran angebracht zu werden, um die Außenrückspiegelbaugruppe und den Videoanzeigebildschirm an der Fahrzeugtür zu montieren.

2. Sichtsystem nach einem der vorhergehenden Ansprüche, wobei der Videoanzeigebildschirm betriebsfähig ist, um Informationen als Reaktion auf eine Benutzereingabe (26; 26') anzuzeigen, die an dem oder in der Nähe des Videoanzeigebildschirm(s) angeordnet ist.

3. Sichtsystem nach Anspruch 2, wobei die Benutzereingabe zumindest eines der Folgenden umfasst (i) einen Berührungssensor, (ii) eine taktile Eingabe (iii) einen kapazitiven Berührungssensor, (iv) einen Näherungssensor, (v) einen optischen Näherungssensor, (vi) einen Gestenerkennungssensor, (vii) eine Taste und (viii) einen Kippschalter.

4. Sichtsystem nach einem der vorhergehenden Ansprüche, wobei das Sichtsystem mit einem Netzwerkbus des Fahrzeugs verbunden ist.

5. Sichtsystem nach Anspruch 4, wobei das Sichtsystem mit mindestens einem anderen System des Fahrzeugs über den Netzwerkbus kommuniziert, und wobei mindestens eines der Folgenden gilt: (i) der Bildsensor nimmt Bilder zur Verwendung in Verbindung mit einem bildbasierten System des Fahrzeugs auf und (ii) der Anzeigebildschirm ist betriebsfähig, um Informationen anzuzeigen, die mit einem informationsbasierten System des Fahrzeugs assoziiert sind.

6. Sichtsystem nach einem der vorhergehenden Ansprüche, wobei der Bildsensor ein nach hinten gerichtetes Sichtfeld im Allgemeinen hinter dem Fahrzeug aufweist.

7. Sichtsystem nach einem der vorhergehenden Ansprüche, wobei der Bildsensor ein Sichtfeld von mindestens einem der Folgenden aufweist: (i) vor dem Fahrzeug, (ii) seitlich vom Fahrzeug und (iii) nach unten an der Seite des Fahrzeugs.

8. Sichtsystem nach einem der vorhergehenden Ansprüche, wobei das Sichtsystem betriebsfähig ist, um visuelle Verbesserungen auf dem Anzeigebildschirm anzuzeigen, um den Fahrer auf Objekte aufmerksam zu machen, die im Sichtfeld des Bildsensors detektiert wurden.

9. Sichtsystem nach Anspruch 1, wobei die Moduleinheit einen äußeren Verkleidungsteil (132) umfasst, der an dem äußeren Teil der Fahrzeugtür angeordnet ist, wenn die Moduleinheit an der Öffnung in der Fahrzeugtür montiert ist und wobei die Moduleinheit einen inneren Verkleidungsteil (134) umfasst, der an dem inneren Teil der Fahrzeugtür angeordnet ist, wenn die Moduleinheit an der Öffnung in der Fahrzeugtür montiert ist.

## Revendications

1. Système de vision pour un véhicule (11 ; 111), ledit système de vision comprenant :
un ensemble de miroir de rétroviseur extérieur (12 ; 112) monté sur une partie extérieure d'une portière (11a ; 111a) d'un véhicule équipé dudit système de vision, ledit ensemble de miroir de rétroviseur extérieur comprenant un élément de miroir réfléchissant (16 ; 116) et un boîtier de miroir (18 ; 118), dans lequel ledit élément de miroir réfléchissant fournit un champ de vision de rétroviseur à un conducteur du véhicule équipé ;
un capteur d'imagerie (20 ; 120) disposé au niveau dudit ensemble de miroir de rétroviseur extérieur (12 ; 112) ayant un champ de vision extérieur au véhicule ;
un écran d'affichage vidéo (22 ; 122) pouvant fonctionner pour présenter des images vidéo capturées par ledit capteur d'imagerie ;
dans lequel ledit écran d'affichage vidéo est disposé au niveau d'un logement d'affichage fixé à une partie intérieure de la portière du véhicule sur laquelle est monté ledit ensemble de miroir de rétroviseur extérieur ;
dans lequel ledit ensemble de miroir de rétroviseur extérieur et ledit logement d'affichage (124) font partie d'un module de miroir et d'affichage qui peut être monté sur la portière du véhicule en tant qu'unité modulaire ;
dans lequel ladite unité modulaire est configurée pour être montée au niveau d'une ouverture (111B) dans la portière du véhicule ; et
dans lequel ladite unité modulaire comprend une partie de connexion (130) qui est disposée entre ledit ensemble de miroir de rétroviseur extérieur et ledit écran d'affichage vidéo et qui est configurée pour s'étendre à travers l'ouverture dans la portière du véhicule pour y être fixée afin de monter ledit ensemble de miroir de rétroviseur extérieur et ledit écran d' affichage vidéo à la portière du véhicule.

2. Système de vision selon une quelconque revendication précédente, dans lequel ledit écran d'affichage vidéo est utilisable pour présenter des informations en réponse à une entrée d'utilisateur (26 ; 26') disposée sur ou à proximité dudit écran d'affichage vidéo.

3. Système de vision selon la revendication 2, dans lequel ladite entrée d'utilisateur comprend au moins l'un (i) d'un capteur tactile, (ii) d'une entrée tactile, (iii) d'un capteur tactile capacitif, (iv) d'un capteur de proximité, (v) d'un capteur de proximité optique, (vi) d'un capteur de reconnaissance de geste, (vii) d'un bouton et (viii) d'une bascule.

4. Système de vision selon une quelconque revendication précédente, dans lequel ledit système de vision est connecté à un bus de réseau du véhicule.

5. Système de vision selon la revendication 4, dans lequel ledit système de vision communique avec au moins un autre système du véhicule via ledit bus de réseau, et dans lequel (i) ledit capteur d'imagerie saisit des images à utiliser en connexion avec un système à base d'images du véhicule et/ou (ii) ledit écran d'affichage peut être utilisé pour présenter des informations associées à un système à base d'informations du véhicule.

6. Système de vision selon une quelconque revendication précédente, dans lequel ledit capteur d'imagerie a un champ de vision de rétroviseur généralement situé vers l'arrière du véhicule.

7. Système de vision selon une quelconque revendication précédente, dans lequel ledit capteur d'imagerie a un champ de vision d'au moins l'un (i) de l'avant du véhicule, (ii) du côté du véhicule et (iii) du bas sur le côté du véhicule.

8. Système de vision selon une quelconque revendication précédente, dans lequel ledit système de vision peut fonctionner pour présenter des améliorations visuelles sur ledit écran d'affichage pour alerter le conducteur concernant des objets détectés dans le champ de vision dudit capteur d'image.

9. Système de vision selon la revendication 1, dans lequel ladite unité modulaire comprend une partie de garniture extérieure (132) qui est disposée au niveau de la partie extérieure de la portière du véhicule lorsque ladite unité modulaire est montée au niveau de l'ouverture dans la portière du véhicule et dans lequel ladite unité modulaire comprend une partie de garniture intérieure (134) qui est disposée au niveau de la partie intérieure de la portière du véhicule lorsque ladite unité modulaire est montée au niveau de l'ouverture dans la portière du véhicule.
